# EUROPEAN PATENT APPLICATION

(11) **EP 4 852 564 A1**
(43) Date of publication of application: **09.12.2026**
(21) Application number: 25751070.1
(22) Date of filing: 10.01.2025
(51) Int. Cl.: H04W 72/0446

(54) **COMMUNICATION METHOD, COMMUNICATION DEVICE AND STORAGE MEDIUM**

(30) Priority: 06.02.2024 CN 202410171521
(71) Applicant: ZTE Corporation, Shenzhen 518057 (CN)
(72) Inventor: ZHANG, Chenchen, Shenzhen, Guangdong 518057 (CN); XUE, Fei, Shenzhen, Guangdong 518057 (CN); ZHOU, Wubin, Shenzhen, Guangdong 518057 (CN)
(74) Representative: Ziebig Hengelhaupt Intellectual Property Attorneys Patentanwaltskanzlei PartGmbB
(86) International application number: PCT/CN2025/071856
(87) International publication number: WO 2025/167468

(57) **Abstract**

A communication method, a communication device, and a storage medium. The method comprises: receiving a first downlink signal from a second node, wherein the first downlink signal is one downlink signal among a plurality of downlink signals sent by the second node, and the plurality of downlink signals overlap in a time domain.

## Description

The present disclosure claims priority to Chinese Patent Application No. 202410171521.7 filed on February 6, 2024, the entire contents of which are incorporated herein by reference.

### TECHNICAL FIELD

The present disclosure relates to the technical field of communications, and in particular, to a communication method, a communication apparatus, and a storage medium.

### BACKGROUND

A working mode of a terminal antenna includes a multi-antenna panel mode and a single-antenna panel mode. In the multi-antenna panel mode, the terminal may receive, via a plurality of antenna panels, a plurality of downlink signals that are sent from a base station and overlap in time domain.

### SUMMARY

In an aspect, the embodiments of the present disclosure provide a communication method, where the communication method includes: receiving a first downlink signal from a second node; where the first downlink signal is a downlink signal among a plurality of downlink signals sent from the second node; and the plurality of downlink signals overlap in time domain.

In another aspect, the embodiments of the present disclosure provide provides a communication apparatus, where the communication apparatus includes: a receiving unit, configured to receive a first downlink signal from a second node; where the first downlink signal is a downlink signal among a plurality of downlink signals sent from the second node; and the plurality of downlink signals overlap in time domain.

In yet another aspect, the embodiments of the present disclosure provide a communication method, where the communication method includes: sending a first downlink signal to a first node; where the first downlink signal is a downlink signal among a plurality of downlink signals sent from a second node; the first node is a node that expects to use a single-signal reception mode; and the plurality of downlink signals overlap in time domain.

In yet another aspect, the embodiments of the present disclosure provide a communication apparatus, where the communication apparatus includes: a sending unit, configured to send a first downlink signal to a first node; where the first downlink signal is a downlink signal among a plurality of downlink signals sent from a second node; the first node is a node that expects to use a single-signal reception mode; and the plurality of downlink signals overlap in time domain.

In yet another aspect, the embodiments of the present disclosure provide a communication method, where the communication method includes: sending second indication information to a second node, where the second indication information includes a requirement of a measurement gap of a target cell in an activated state, and/or a requirement of a measurement gap of a target cell in a deactivated state.

In yet another aspect, the embodiments of the present disclosure provide a communication apparatus, where the communication apparatus includes: a sending unit, configured to send second indication information to a second node, where the second indication information includes a requirement of a measurement gap of a target cell in an activated state, and/or a requirement of a measurement gap of a target cell in a deactivated state.

In yet another aspect, the embodiments of the present disclosure provide a communication method, where the communication method includes: receiving second indication information sent from a first node, where the second indication information includes a requirement of a measurement gap of a target cell in an activated state, and/or a requirement of a measurement gap of a target cell in a deactivated state.

In yet another aspect, the embodiments of the present disclosure provide a communication apparatus, where the communication apparatus includes: a receiving unit, configured to receive second indication information sent from a first node, where the second indication information includes a requirement of a measurement gap of a target cell in an activated state, and/or a requirement of a measurement gap of a target cell in a deactivated state.

In yet another aspect, the embodiments of the present disclosure provide a communication apparatus, where the communication apparatus includes: a memory and a processor; the memory and the processor are coupled; the memory is configured to store a computer program; and the processor, upon executing the computer program, implements the communication method according to any one of the embodiments described above.

In yet another aspect, the embodiments of the present disclosure provide a computer-readable storage medium, the computer-readable storage medium stores computer program instructions, where the computer program instructions, upon being executed by a processor, implement the communication method according to any one of the embodiments described above.

In yet another aspect, the embodiments of the present disclosure provide a computer program product, the computer program product includes computer program instructions, where the computer program instructions, upon being executed by a processor, implement the communication method according to any one of the embodiments described above.

### BRIEF DESCRIPTION OF THE DRAWINGS

In order to more clearly illustrate the technical solutions in the present disclosure, the drawings required for some embodiments of the present disclosure will be briefly introduced below. Apparently, the drawings in the following description are merely drawings of some embodiments of the present disclosure, and for a person of ordinary skill in the art, other drawings may also be obtained based on these drawings.
FIG. 1 is a system architecture diagram according to some embodiments of the present disclosure.
FIG. 2 is a flowchart of a communication method according to some embodiments of the present disclosure.
FIG. 3 is another flowchart of a communication method according to some embodiments of the present disclosure.
FIG. 4 is yet another flowchart of a communication method according to some embodiments of the present disclosure.
FIG. 5 is yet another flowchart of a communication method according to some embodiments of the present disclosure.
FIG. 6 is yet another flowchart of a communication method according to some embodiments of the present disclosure.
FIG. 7 is yet another flowchart of a communication method according to some embodiments of the present disclosure.
FIG. 8 is yet another flowchart of a communication method according to some embodiments of the present disclosure.
FIG. 9 is a block diagram of a communication apparatus according to some embodiments of the present disclosure.
FIG. 10 is another block diagram of a communication apparatus according to some embodiments of the present disclosure.
FIG. 11 is yet another block diagram of a communication apparatus according to some embodiments of the present disclosure.
FIG. 12 is yet another block diagram of a communication apparatus according to some embodiments of the present disclosure.
FIG. 13 is yet another block diagram of a communication apparatus according to some embodiments of the present disclosure.

### DETAILED DESCRIPTION

The technical solutions in the present disclosure will be clearly and completely described below with reference to the drawings in the present disclosure. Obviously, the described embodiments are only a part of the embodiments of the present disclosure, rather than all the embodiments. Based on the embodiments in the present disclosure, all other embodiments obtained by a person of ordinary skill in the art without creative efforts shall fall within the protection scope of the present disclosure.

It should be noted that, in the present disclosure, wordings such as "exemplary" or "for example" are used to represent an example, an illustration, or a description. Any embodiment or design solution described as "exemplary" or "for example" in the present disclosure shall not be construed as being more preferred or more advantageous than other embodiments or design solutions. Specifically, the usage of wordings such as "exemplary" or "for example" is intended to present the relevant concept in a concrete manner.

Hereinafter, the terms "first" and "second" are used for descriptive purposes only and shall not be understood as indicating or implying relative importance or implicitly indicating the number of the indicated technical feature. Thus, a feature defined with "first" or "second" may explicitly or implicitly include one or more of such feature.

In the description of the present disclosure, unless otherwise stated, "/" means "or". For example, A/B may mean A or B. Herein, "and/or" is merely an association relationship describing the associated objects, indicating that there may be three relationships. For example, A and/or B may represent three situations: A alone, both A and B, and B alone. In addition, "at least one" refers to one or more, and "multiple/plurality of" refers to two or more.

In the related art, for a terminal supporting a relatively high frequency (e.g., a frequency range 2 (frequency range 2, FR2) band), hardware configuration of the terminal may be configured with a plurality of antenna panels. This type of terminal may support a multi-antenna panel mode in which a plurality of antenna panels operate simultaneously, and may also support a single-antenna panel mode in which a antenna panel operates. The terminal may determine, based on its own capability, whether to use the single-antenna panel mode or the multi-antenna panel mode. For example, upon determining that a plurality of signals sent from the base station are downlink signals in different beam directions, the terminal may choose to receive the plurality of downlink signals via the multi-antenna panel mode. Upon determining that the downlink signal sent from the base station is in the same beam direction, the terminal may choose to receive the downlink signal via the single-antenna panel mode.

In some embodiments, the terminal may send user equipment assistance information (UE assistance information, UAI) to the base station to indicate, to the base station, an antenna panel mode expected to be used by the terminal. Taking the UAI sent from the terminal to the base station being a preference to single-antenna panel mode signaling as an example. After the terminal sends the UAI to the base station, the terminal determines that the single-antenna panel mode needs to be used and that a switch from the multi-antenna panel mode to the single-antenna panel mode is required. However, after the base station receives the UAI, the base station may not stop scheduling or sending signals in a plurality of beam directions accordingly, but may still determine, based on its own decision, whether subsequently scheduled and reconfigured signals are signals in a plurality of different beam directions. That is, after the base station receives the UAI, the base station may still send a plurality of signals in different beam directions to the terminal. In this case, the terminal cannot receive, via the single-antenna panel, a plurality of downlink signals overlapping in time domain (such as the plurality of signals in different beam directions), which will reduce the working efficiency of the terminal.

To solve the above technical problem, some embodiments of the present disclosure provide a communication method. When a first node expects to use a single-signal reception mode, the first node receives only a downlink signal among a plurality of downlink signals that overlap in time domain and are from a second node, rather than receiving all of the plurality of signals, thereby avoiding the problem of reduced operating efficiency caused by the terminal being unable to receive the plurality of downlink signals upon expecting to use the single-antenna panel mode.

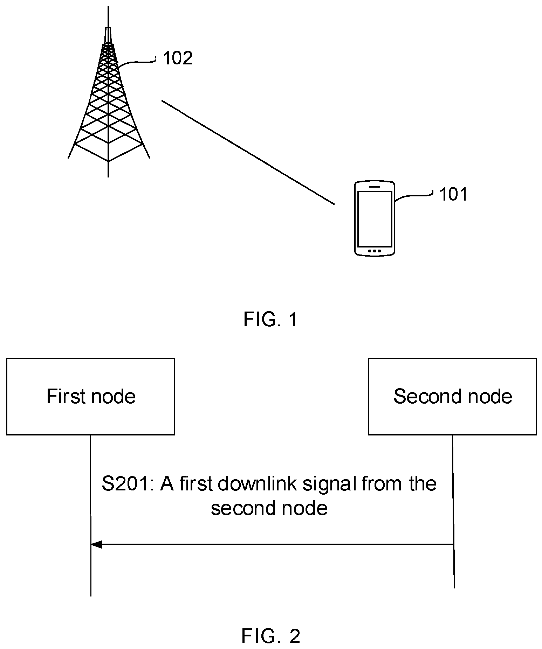

The communication method provided by some embodiments of the present disclosure may be applied to a communication system as shown in FIG. 1. As shown in FIG. 1, the communication system includes a first node 101 and a second node 102.

The first node 101 and the second node 102 are in communication connection. The first node 101 may be a user equipment or a terminal. The second node 102 may be a base station. FIG. 1 is illustrated by taking the first node 101 being a terminal and the second node 102 being a base station as an example.

In an actual application, the second node 102 may send a downlink signal to the first node 101, and may also send a plurality of downlink signals that overlap in time domain. The first node 101 may receive a downlink signal sent from the second node 102 via a single-signal reception mode (single-Rx mode), and may also receive a plurality of downlink signals that overlap in time domain and are sent from the second node 102 via a multi-signal reception mode (multi-Rx mode).

In some embodiments of the present disclosure, the second node 102 may send a plurality of downlink signals that overlap in time domain to the first node 101. the first node 101, upon expecting to use the single-signal reception mode, may receive a downlink signal, i.e., a first downlink signal, among the plurality of downlink signals that overlap in time domain and are sent from the second node 102. In this way, when the first node 101 expects to use the single-signal reception mode and is faced with a plurality of downlink signals that overlap in time domain, the first node 101 may determine to receive a downlink signal among the plurality of downlink signals, thereby solving the technical problem that the terminal cannot receive a plurality of downlink signals that overlap in time domain via a single-antenna panel.

It should be noted that FIG. 1 is only an exemplary framework diagram. A number of devices included in FIG. 1 and the names of the respective devices are not limited, and in addition to the devices shown in FIG. 1, the communication system may also include other devices, such as a core network.

The application scenarios of some embodiments of the present disclosure are not limited. The system architecture and service scenarios described in some embodiments of the present disclosure are intended to more clearly illustrate the technical solutions of some embodiments of the present disclosure, and do not constitute a limitation on the technical solutions provided by some embodiments of the present disclosure. A person of ordinary skill in the art may know that, with the evolution of the network architecture and the emergence of new service scenarios, the technical solutions provided by some embodiments of the present disclosure are equally applicable to similar technical problems.

The communication method provided by some embodiments of the present disclosure will be described in detail below with reference to the drawings.

The communication method provided by some embodiments of the present disclosure may be applied to the first node 101 in the communication system shown in FIG. 1. FIG. 2 shows a flowchart of a communication method. As shown in FIG. 2, the communication method at least includes S201.

In S201, a first node receives a first downlink signal from a second node.

The first downlink signal is a downlink signal among a plurality of downlink signals sent from the second node; the plurality of downlink signals overlap in time domain. The time domain overlap includes complete overlap and/or partial overlap. The single-signal reception mode includes a single-antenna panel mode or a single radio frequency chain mode. Correspondingly, the multi-signal reception mode includes a multi-antenna panel mode or a multi radio frequency chain mode.

In some embodiments, the plurality of signals overlapping in time domain may be signals in a plurality of different beam directions sent from the base station to the terminal.

In some implementations, the second node may send a plurality of downlink signals that overlap in time domain (or time domain resources) to the first node. At this time, when the first node expects to use the single-signal reception mode, the first node selects a downlink signal from the plurality of downlink signals that overlap in time domain and are sent from the second node as the first downlink signal to be received, and the first node receives the first downlink signal via the single-signal reception mode. In this way, when the first node expects to use the single-signal reception mode, the first node may determine to receive only one downlink signal rather than all the downlink signals, thereby avoiding the problem of reduced working efficiency caused by the terminal being unable to receive a plurality of downlink signals when expecting to use the single-signal reception mode.

In an implementation, when the second node determines that the first node expects to switch from the multi-signal reception mode to the single-signal reception mode (for example, the second node receives the UAI of the first node), the second node may still send or schedule a plurality of downlink signals that overlap in time domain to the first node. At this time, when the first node detects the plurality of downlink signals sent from the second node, the first node may choose to switch to the single-signal reception mode, or may still maintain the multi-signal reception mode, which is not limited in the present disclosure. In a case where the first node still maintains the multi-signal reception mode, the first node may receive only the first downlink signal among the plurality of downlink signals, or may receive all of the plurality of downlink signals via a plurality of antenna panels (or a plurality of radio frequency chains).

In some embodiments of the present disclosure, the plurality of downlink signals sent from the second node to the first node may include different types of signals, which will be described separately below.

In some embodiments, the plurality of downlink signals include a channel transmission signal; or the plurality of downlink signals include: a channel transmission signal and a reference signal; or the plurality of downlink signals include: a reference signal.

The channel transmission signal is a downlink signal transmitted based on a physical downlink shared channel and/or a physical downlink control channel. The reference signal is any one of: a periodic reference signal, an aperiodic reference signal, or a semi-persistent reference signal. The reference signal is a channel state information reference signal or a synchronization signal block.

It can be understood that the downlink signal transmitted based on the physical downlink shared channel and/or the physical downlink control channel may be a signal used for service transmission, and the reference signal may be a signal used for measurement, or the reference signal may be a pilot signal.

Since the plurality of signals may include the downlink signal transmitted based on the physical downlink shared channel and/or the physical downlink control channel, the first node may receive the downlink signal transmitted based on the physical downlink shared channel, and/or the first node may receive the downlink signal transmitted based on the physical downlink control channel.

The first node receiving the downlink signal transmitted based on the physical downlink control channel may also be referred to as: the first node receiving a physical downlink control channel (PDCCH). The first node receiving the downlink signal transmitted based on the physical downlink shared channel may also be referred to as: the first node receiving a physical downlink shared channel (PDSCH). The PDSCH may be at least one of: a PDSCH dynamically scheduled by downlink control information (DCI), a PDSCH semi-statically configured by radio resource control (RRC) signaling and dynamically activated by the DCI, and a PDSCH semi-statically configured by radio resource control (RRC) signaling and dynamically activated by a media access control control element (MAC control element, MAC CE).

The reference signal (RS) includes at least one of: a periodic synchronization signal block (SS block, SSB) configured by an RRC signaling, a channel state information-reference signal (CSI-RS) configured by an RRC signaling, a semi-persistent CSI-RS configured by an RRC signaling and activated by an MAC CE, and an aperiodic CSI-RS dynamically scheduled by DCI.

In some embodiments of the present disclosure, the first node may determine the first downlink signal in various manners. For example, the first node determines a signal with a highest priority among the plurality of downlink signals as the first downlink signal; or the first node determines a signal detected earliest by the first node among the plurality of downlink signals as the first downlink signal; or the first node determines a signal scheduled earliest by the second node among the plurality of downlink signals as the first downlink signal. That is, the first downlink signal satisfies at least one of: being a signal with a highest priority among the plurality of downlink signals; being a signal detected earliest by the first node among the plurality of downlink signals; being a signal scheduled earliest by the second node among the plurality of downlink signals; or being a signal with an earliest starting time domain resource among the plurality of downlink signals.

As an example, taking the case where the plurality of downlink signals include a downlink signal A and a downlink signal B as example, the time domain resources of the downlink signal A are symbol 3, symbol 4, and symbol 5, and the time domain resources of the downlink signal B are symbol 4, symbol 5, and symbol 6. Since the starting time domain resource of the downlink signal A is symbol 3, and the starting time domain resource of the downlink signal B is symbol 4, the starting time domain resource of the downlink signal A is earlier than the starting time domain resource of the downlink signal B.

In some embodiments of the present disclosure, when the first downlink signal is the signal with the highest priority among the plurality of downlink signals, the first node may determine the priorities of the plurality of downlink signals in various manners. Various manners for the first node to determine the priorities of the plurality of downlink signals are described below.

In some embodiments, the priorities of the plurality of downlink signals are determined based on at least one of: being determined based on a priority preconfigured by a system; being determined based on priority configuration information sent from the second node; being determined based on control resource set (CORESET) indexes for scheduling the plurality of downlink signals; or being determined based on resource indexes of the plurality of downlink signals.

When the priorities of the plurality of downlink signals are determined based on a priority preconfigured by a system, the first node, upon detecting the plurality of downlink signals, may determine the first downlink signal based on preconfigured priority information stored locally. Alternatively, when the priorities of the plurality of downlink signals are semi-statically configured by the second node, the second node may send priority configuration information to the first node. Thereafter, the first node may receive the priority configuration information, and determine the priorities of the plurality of downlink signals according to the priority configuration information.

Alternatively, when the priorities of the plurality of downlink signals are determined based on the CORESET indexes of the plurality of downlink signals, the first node, after detecting the plurality of downlink signals, may determine the priority of each downlink signal based on the CORESET index (or index) of each downlink signal.

Alternatively, when the downlink signal is a reference signal, the first node may determine the priority of the downlink signal based on a resource index (resource index) of the downlink signal.

The smaller the CORESET index of a target downlink signal, the higher the priority of the target downlink signal, where the target downlink signal is any one of the plurality of downlink signals. The smaller the resource index of the target downlink signal, the higher the priority of the target downlink signal, where the target downlink signal is any one of the plurality of downlink signals.

In some embodiments of the present disclosure, in combination with the above embodiment that the plurality of downlink signals include a plurality of types of downlink signals, the priorities of different types of downlink signals may be different, and the priorities of the plurality of types of downlink signals will be described below.

In some embodiments, the priorities of the plurality of downlink signals satisfy at least one of: a priority of an aperiodic reference signal is higher than that of a semi-persistent reference signal, or a priority of the aperiodic reference signal is lower than that of the semi-persistent reference signal; a priority of the semi-persistent reference signal is higher than that of a periodic reference signal, or a priority of the semi-persistent reference signal is lower than that of the periodic reference signal; a priority of a synchronization signal block is higher than that of a channel state information reference signal, or a priority of the synchronization signal block is lower than that of the channel state information reference signal; a priority of a channel state information reference signal configured with repetition OFF is higher than that of a channel state information reference signal configured with repetition ON, or a priority of the channel state information reference signal configured with repetition OFF is lower than that of the channel state information reference signal configured with repetition ON; in a case where the priorities of the plurality of downlink signals are determined based on the CORESET indexes for scheduling the plurality of downlink signals, the smaller the CORESET index for scheduling a downlink signal, the higher the priority of the downlink signal, or in a case where the priorities of the plurality of downlink signals are determined based on the CORESET indexes for scheduling the plurality of downlink signals, the smaller the CORESET index for scheduling a downlink signal, the lower the priority of the downlink signal; in a case where the priorities of the plurality of downlink signals are determined based on the resource indexes of the plurality of downlink signals and the downlink signal is a reference signal, the smaller the resource index of the reference signal, the higher the priority of the reference signal, or in a case where the priorities of the plurality of downlink signals are determined based on the resource indexes of the plurality of downlink signals and the downlink signal is a reference signal, the smaller the resource index of the reference signal, the lower the priority of the reference signal.

It can be understood that the channel state information reference signal configured with repetition OFF is a non-repetitive channel state information reference signal, and the channel state information reference signal configured with repetition ON is a repetitive channel state information reference signal.

In some embodiments of the present disclosure, in combination with the above multiple embodiments, the manner in which the first node determines the first downlink signal will be described separately below for various situations where the plurality of downlink signals include a plurality of types of signals. The various situations are respectively: situation 1, the plurality of downlink signals include channel transmission signals; situation 2, the plurality of downlink signals include a channel transmission signal and a reference signal; and situation 3, the plurality of downlink signals include a reference signal. Detailed descriptions are given below:
Situation 1: the plurality of downlink signals include channel transmission signals.

That is, the plurality of downlink signals include a downlink signal transmitted based on the physical downlink shared channel and/or the physical downlink control channel.

Taking the case where the plurality of downlink signals include two downlink signals as an example, the plurality of downlink signals may include: a signal transmitted based on PDCCH and a signal transmitted based on PDCCH; or a signal transmitted based on PDCCH and a signal transmitted based on PDSCH; or a signal transmitted based on PDSCH and a signal transmitted based on PDSCH. At this time, manners for the first node to determine the first downlink signal from the two downlink signals include:
(1) The first node determines the first downlink signal based on the priorities of the two downlink signals.

As an example, the priority of a downlink signal may be a priority of a control resource set index (CORESET index) corresponding to the downlink signal. At this time, upon receiving a downlink signal, the first node receives a downlink signal transmitted by a PDCCH carried in a CORESET with the highest priority. The priority of the CORESET index may be a preconfigured CORESET index priority, or may also be a CORESET index priority semi-statically configured by the second node.

(2) The first node determines the first downlink signal based on a time domain order of the two downlink signals.

For example, the first node determines a signal transmitted based on PDCCH that is detected earliest as the first downlink signal. Alternatively, the first node determines a signal transmitted based on PDSCH that is scheduled earliest by the second node as the first downlink signal.

After determining the first downlink signal, the first node will no longer receive other signals of PDSCH/PDCCH transmission whose time domain resources overlap.

Situation 2: the plurality of downlink signals include a channel transmission signal and a reference signal.

Taking the case where the plurality of downlink signals include two downlink signals as an example, the plurality of downlink signals may include a signal transmitted based on PDCCH and a reference signal, or a signal transmitted based on PDSCH and a reference signal. When the reference signal is at least one of: a reference signal configured by an RRC signaling, a reference signal configured by an MAC CE, or a reference signal scheduled by DCI, there exist the channel transmission signal and the reference signal that overlap in time domain and need to be received by the first node.

(3) The first node determines the first downlink signal based on the priorities of the two downlink signals: the priority between the channel transmission signal and the reference signal may be a priority preconfigured by a system, so that the first node may determine the first downlink signal based on the priority stored locally. For example, the priority of the reference signal may be higher than the priority of the channel transmission signal.

Alternatively, the second node may semi-statically configure the priorities between the channel transmission signal and the reference signal. Thereafter, the second node may send the priority configuration information to the first node via second indication information, so that the first node may determine the first downlink signal based on the priorities of the plurality of downlink signals.

Situation 3: the plurality of downlink signals include reference signals.

Taking the case where the plurality of downlink signals include two downlink signals as an example, the plurality of downlink signals may include two reference signals.

(4) The first node determines the first downlink signal based on the priorities of the two downlink signals: the priority among the plurality of reference signals may be a preconfigured priority. In this way, the first node may determine the first downlink signal through the priorities stored locally. For example, the priority of an aperiodic reference signal is higher than that of a semi-persistent reference signal; the priority of the semi-persistent reference signal is higher than that of a periodic reference signal; the priority of a synchronization signal block is higher than that of a channel state information reference signal; the priority of a channel state information reference signal configured with repetition OFF is higher than that of a channel state information reference signal configured with repetition ON, and the like.

In some embodiments of the present disclosure, the first node may determine that it expects to use the single-signal reception mode in various scenarios, which are respectively: scenario 1: the first node sends, to the second node, indication information indicating that it expects to use the single-signal reception mode to receive a signal; and scenario 2: the second node indicates to the first node that a transmission configuration indication state (TCI state) is no longer a pair of beam pairs. Detailed descriptions are given below respectively:
Scenario 1: the first node sends, to the second node, indication information indicating that the first node itself expects to use the single-signal reception mode to receive a signal.

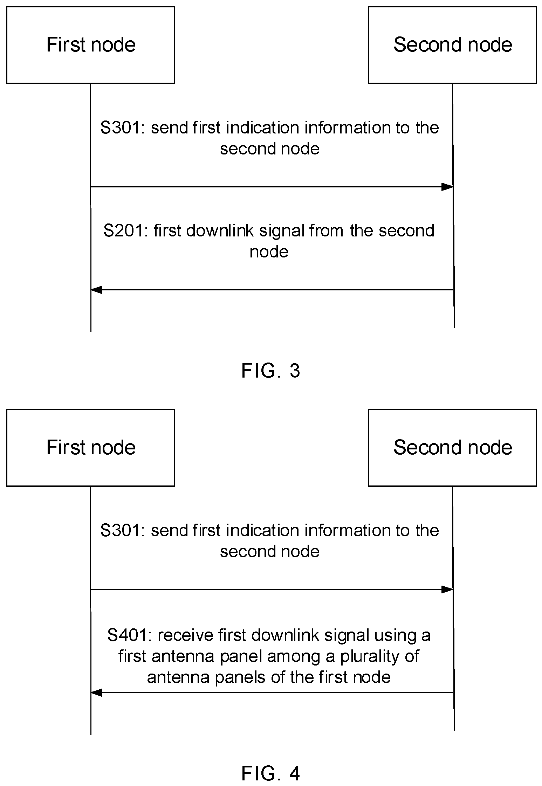

FIG. 3 shows another flowchart of a communication method. With reference to FIG. 2, as shown in FIG. 3, before the above S201, the method provided by some embodiments of the present disclosure further includes S301.

In S301, the first node sends first indication information to the second node.

The first indication information is used to indicate that the first node expects to use the single-signal reception mode.

As an example, the first indication information may be preference to single-Rx mode UAI signaling sent from the first node to the second node.

It can be understood that, after the second node receives the first indication information sent from the first node and switches the multi-data reception scheduling (multi-data Rx scheduling) of the second node to single-data reception scheduling (single-data Rx scheduling), the second node will not send downlink signals that overlap in time domain to the first node. At this time, the first node may receive, via the single-signal reception mode, downlink signals that do not overlap in time domain and are sent from the second node.

The multi-data reception scheduling is a manner in which the second node sends a plurality of downlink signals that overlap in time domain to the first node, and the single-data reception scheduling is a manner in which the second node sends a plurality of downlink signals that overlap in time domain to the first node.

In an implementation, when the first node expects to use the single-signal reception mode and the signals sent from the second node are still a plurality of downlink signals that overlap in time domain, if the first node has not yet switched to the single-signal reception mode at this time, the first node may maintain the current multi-signal reception mode, and continue to receive, using the multi-signal reception mode, the plurality of downlink signals that overlap in time domain.

Correspondingly, after the first node expects to use the single-signal reception mode, the first node may switch from the multi-signal reception mode to the single-signal reception mode. In this case, when the first node detects the plurality of downlink signals that overlap in time domain, the first node may switch from the multi-signal reception mode to the single-signal reception mode, thereby receiving the first downlink signal via the single-signal reception mode.

In an implementation, the second node may send, before sending the first indication information to the first node, the plurality of downlink signals that overlap in time domain to the first node; or the second node may also send the plurality of downlink signals that overlap in time domain to the first node after the first node sends the first indication information, which is not limited in the present disclosure.

Scenario 2: the second node indicates to the first node that the transmission configuration indication state is no longer a pair of beam pairs.

In an implementation, when the second node determines that the second node itself no longer uses multiple beams to transmit signals to the first node, the second node sends, to the first node, a message indicating that the transmission configuration indication state may no longer be a pair of beam pairs. After receiving the message, the first node may determine that it expects to use the single-signal reception mode.

In some embodiments, FIG. 4 shows yet another flowchart of a communication method. With reference to FIG. 2, as shown in FIG. 4, in the above S201, the first node receiving the first downlink signal from the second node includes S401.

In S401, the first node receives the first downlink signal using a first antenna panel among a plurality of antenna panels of the first node.

The first antenna panel is an antenna panel that operates upon the first node being in the single-antenna panel mode.

In some implementations, when receiving the first downlink signal, the first node may receive the first downlink signal via the single-antenna panel mode, that is, the first node may receive the first downlink signal based on the first antenna panel among the plurality of antenna panels, thereby receiving a downlink signal among the plurality of downlink signals that overlap in time domain.

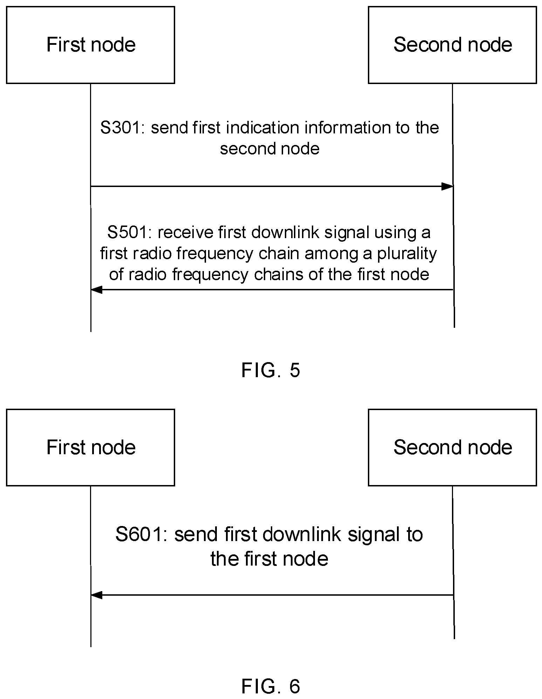

In some embodiments, FIG. 5 shows yet another flowchart of a communication method. With reference to FIG. 2, as shown in FIG. 5, in the above S201, the first node receiving the first downlink signal from the second node includes S501.

In S501, the first node receives the first downlink signal using a first radio frequency chain among a plurality of radio frequency chains of the first node.

The first radio frequency chain is a radio frequency chain that operates upon the first node being in the single radio frequency chain mode.

In some implementations, when receiving the first downlink signal, the first node may receive the first downlink signal via the single radio frequency chain mode, that is, the first node may receive the first downlink signal based on the first radio frequency chain among the plurality of radio frequency chains, thereby receiving a downlink signal among the plurality of downlink signals that overlap in time domain.

The communication method provided by some embodiments of the present disclosure may also be applied to the second node 102 in the communication system shown in FIG. 1. FIG. 6 shows yet another flowchart of a communication method. As shown in FIG. 6, the communication method includes S601.

In S601, the second node sends a first downlink signal to a first node.

The first downlink signal is a downlink signal among a plurality of downlink signals sent from the second node. The plurality of downlink signals overlap in time domain.

It can be understood that, for the description of the second node sending the first downlink signal to the first node and the description of the plurality of downlink signals, reference may be made to S201 and S301, which won't be repeated in the present disclosure.

In some embodiments of the present disclosure, the terminal may feed back a requirement ofa measurement gap (e.g., gap) to the base station, thereby indicating to the base station that the terminal performs various measurements of a cell in the measurement gap. In some embodiments, the measurement gap also includes a measurement gap type with a relatively short interruption time, i.e., a network controlled small gap (NCSG). The NCSG may be applied to measurement of a deactivated secondary cell (deactivated SCell), and may also be applied to intra-frequency cell measurement, inter-frequency cell measurement of a neighbour cell, and intra-frequency measurement of a serving cell. The gap is a common type of measurement gap, and the NCSG is a measurement gap of a type different from the gap.

The terminal may feed back, via a signaling, to the base station a requirement for the gap and the NCSG in the same frequency or different frequencies. However, the requirement for the measurement gap fed back by the terminal to the base station cannot be adapted to measurement requirements of the cell in various states, which will lead to reduced working efficiency of cell measurement.

In this scenario, in combination with the communication system shown in FIG. 1 above, in an actual application, the first node 101 may feed back a requirement of the measurement gap for a neighbour cell, an intra-frequency cell, or an inter-frequency cell to the second node 102. The second node 102 may receive the requirement of the measurement gap, and determine whether to configure the gap or the NCSG for the first node 101 to assist the first node in performing cell measurement, such as channel measurement, mobility measurement, radio resource management measurement, and the like.

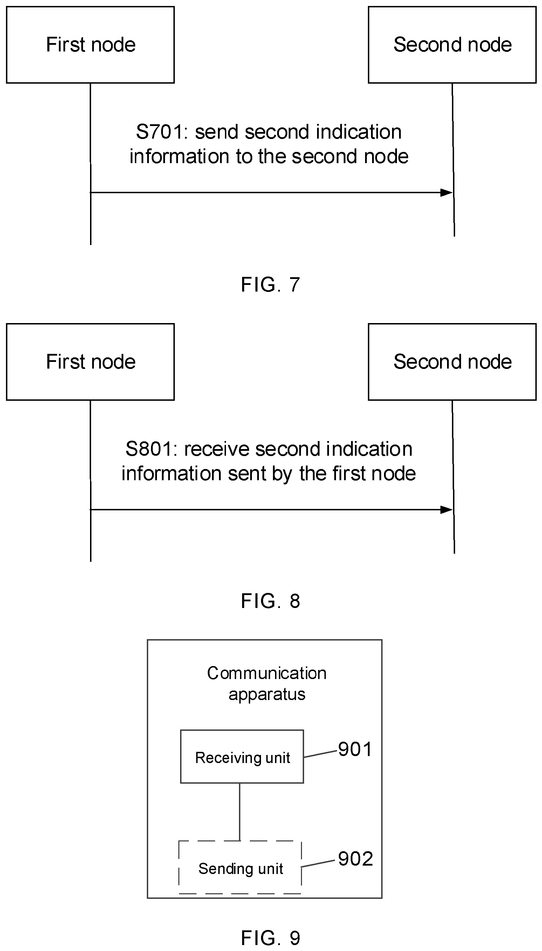

To address the problem that the requirement for the measurement gap fed back by the terminal to the base station cannot be adapted to the measurement requirements of the cell in various states, which will lead to reduced working efficiency of cell measurement, some embodiments of the present disclosure further provide a communication method, which may also be applied to the first node 101 in the communication system shown in FIG. 1. FIG. 7 shows yet another flowchart of a communication method. As shown in FIG. 7, the communication method includes S701.

In S701, the first node sends second indication information to the second node.

The second indication information includes a requirement of the measurement gap of a target cell in an activated state, and/or a requirement of the measurement gap in a deactivated state.

In some implementations, the first node may feed back, to the second node, a requirement of the measurement gap (also referred to as a gap) of the target cell in an activated state, and/or a requirement of the measurement gap in a deactivated state. Thereafter, the second node may better assist the first node in measuring the target cell according to the state of the target cell and a requirement of the measurement gap fed back by the first node. In this way, the first node, upon performing cell measurement, may better adapt to various states of the target cell, thereby improving the working efficiency of cell measurement.

In an implementation, the target cell may be a cell in which the first node is located.

In some embodiments, the measurement gap includes: a gap and a network controlled small gap (NCSG). The measurement gap required by the first node to be fed back to the second node may be the gap or the NCSG, so as to be adapted to diversified requirements during measurement.

In some embodiments, the requirement of the measurement gap includes any one of: requiring the gap, requiring the NCSG, and requiring neither the gap nor the NCSG.

In some implementations, the requirement of measurement gap may include requiring the gap, so that the second node configures the gap, thereby enabling the first node to perform measurement in the gap; or the requirement of the measurement gap may include requiring the NCSG, so that the second node configures the NCSG, thereby enabling the first node to perform measurement in the NCSG; or the requirement of the measurement gap may include requiring neither the gap nor the NCSG, in this case, the second node does not need to configure the gap or the NCSG, and the first node may perform measurement without the assistance of the gap or the NCSG.

The communication method provided by some embodiments of the present disclosure may also be applied to the second node 102 in the communication system shown in FIG. 1. FIG. 8 shows yet another flowchart of a communication method. As shown in FIG. 8, the communication method includes the following S801.

In S801, the second node receives second indication information sent from a first node.

The second indication information includes a requirement of the measurement gap of a target cell in an activated state, and/or a requirement of the measurement gap in a deactivated state.

In an implementation, the second node avoids scheduling data to the first node within the measurement gap sent from the first node. Alternatively, the second node may, based on the requirement of the measurement gap, deliver at least one of: measurement configuration information, gap configuration information, or NCSG configuration information to the first node, so that the first node may perform measurement based on the delivered information.

It can be understood that, for the description of the second node receiving the second indication information sent from the first node, the description of the measurement gap, and the description of the requirement of the measurement gap, reference may be made to the description of S601, which won't be repeated in the present disclosure.

It can be understood that, in order to implement the above functions, the communication apparatus includes corresponding hardware structures and/or software modules for executing the respective functions. A person skilled in the art should easily realize that, in combination with the algorithm steps of the examples described in some embodiments of the present disclosure, some embodiments of the present disclosure can be implemented in the form of hardware or a combination of hardware and computer software. Whether a certain function is executed in the form of hardware or computer software driving hardware depends on the specific application and design constraint conditions of the technical solution. A person skilled in the art may use different methods for each specific application to implement the described function, but such implementation should not be considered as going beyond the scope of the present disclosure.

The embodiments of the present disclosure may divide the communication apparatus into functional modules according to the above method embodiments. For example, each function may be divided into corresponding functional modules, or two or more functions may be integrated into one functional module. The above integrated module may be implemented in the form of hardware, and may also be implemented in the form of software. It should be noted that the division of modules in the embodiments of the present disclosure is schematic and is only a logical function division, and there may be other division manners in actual implementation. The following description is made by taking the case where each function is divided into corresponding functional modules as an example.

FIG. 9 is a block diagram of a communication apparatus according to some embodiments of the present disclosure. The communication apparatus may execute the communication method provided in the above method embodiments. As shown in FIG. 9, the communication apparatus includes a receiving unit 901.

The receiving unit 901 is configured to receive a first downlink signal from a second node. The first downlink signal is a downlink signal among a plurality of downlink signals sent from the second node; the plurality of downlink signals overlap in time domain.

In an implementation, the single-antenna reception mode includes a single-antenna panel mode or a single radio frequency chain mode.

In an implementation, the communication apparatus further includes a sending unit 902.

The sending unit 902 is configured to send first indication information to the second node, where the first indication information is used to indicate that the first node expects to use a single-signal reception mode.

In an implementation, the receiving unit 901 is configured to: receive the first downlink signal using a first antenna panel among a plurality of antenna panels of the first node, where the first antenna panel is an antenna panel that operates upon the first node being in the single-antenna panel mode.

In an implementation, the receiving unit 901 is configured to: receive the first downlink signal using a first antenna panel among a plurality of radio frequency chains of the first node, where the first antenna panel is a radio frequency chain that operates upon the first node being in the single radio frequency chain mode.

In an implementation, the first downlink signal satisfies at least one of: being a signal with a highest priority among the plurality of downlink signals; being a signal detected earliest by the first node among the plurality of downlink signals; being a signal scheduled earliest by the second node among the plurality of downlink signals; or being a signal with an earliest starting time domain resource among the plurality of downlink signals.

In an implementation, priorities of the plurality of downlink signals are determined based on at least one of: being determined based on a priority preconfigured by a system; being determined based on priority configuration information sent from the second node; being determined based on control resource set (CORESET) indexes for scheduling the plurality of downlink signals; or being determined based on resource indexes of the plurality of downlink signals.

In a possible implementation, the priorities of the plurality of downlink signals satisfy at least one of: a priority of an aperiodic reference signal is higher than that of a semi-persistent reference signal, or a priority of the aperiodic reference signal is lower than that of the semi-persistent reference signal; a priority of the semi-persistent reference signal is higher than that of a periodic reference signal, or a priority of the semi-persistent reference signal is lower than that of the periodic reference signal; a priority of a synchronization signal block is higher than that of a channel state information reference signal, or a priority of the synchronization signal block is lower than that of the channel state information reference signal; a priority of a channel state information reference signal configured with repetition OFF is higher than that of a channel state information reference signal configured with repetition ON, or a priority of the channel state information reference signal configured with repetition OFF is lower than that of the channel state information reference signal configured with repetition ON; in a case where the priorities of the plurality of downlink signals are determined based on the CORESET indexes for scheduling the plurality of downlink signals, the smaller a CORESET index for scheduling a downlink signal, the higher a priority of the downlink signal, or in a case where the priorities of the plurality of downlink signals are determined based on the CORESET indexes for scheduling the plurality of downlink signals, the smaller a CORESET index for scheduling a downlink signal, the lower a priority of the downlink signal; in a case where the priorities of the plurality of downlink signals are determined based on the resource indexes of the plurality of downlink signals and a downlink signal is a reference signal, the smaller a resource index of the reference signal, the higher a priority of the reference signal, or in a case where the priorities of the plurality of downlink signals are determined based on the resource indexes of the plurality of downlink signals and a downlink signal is a reference signal, the smaller a resource index of the reference signal, the lower a priority of the reference signal.

In an implementation, the plurality of downlink signals include: channel transmission signals, where the channel transmission signal is a downlink signal transmitted based on a physical downlink shared channel and/or a physical downlink control channel; or the plurality of downlink signals include: channel transmission signalss and a reference signal; or the plurality of downlink signals include: a reference signal.

In an implementation, the reference signal is any one of: a periodic reference signal, an aperiodic reference signal, or a semi-persistent reference signal. The reference signal is a channel state information reference signal or a synchronization signal block.

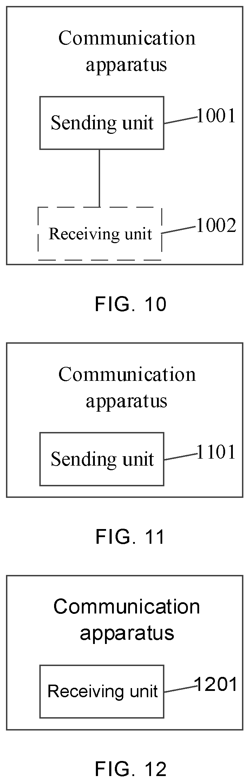

FIG. 10 is another block diagram of a communication apparatus according to some embodiments of the present disclosure. The communication apparatus may execute the communication method provided in the above method embodiments. As shown in FIG. 10, the communication apparatus includes: a sending unit 1001.

The sending unit 1001 is configured to send a first downlink signal to a first node. The first downlink signal is a downlink signal among a plurality of downlink signals sent from the second node. The first node is a node that expects to use a single-signal reception mode. The plurality of downlink signals overlap in time domain.

In an implementation, the single-antenna reception mode includes a single-antenna panel mode or a single radio frequency chain mode.

In an implementation, the communication apparatus further includes a receiving unit 1002.

The receiving unit 1002 is configured to receive first indication information sent from the first node, where the first indication information is used to indicate that the first node expects to use the single-signal reception mode.

In an implementation, the first downlink signal satisfies at least one of: being a signal with a highest priority among the plurality of downlink signals; being a signal detected earliest by the first node among the plurality of downlink signals; or being a signal scheduled earliest by the second node among the plurality of downlink signals.

In a possible implementation, priorities of the plurality of downlink signals are determined based on at least one of: being determined based on a priority preconfigured by a system; being determined based on priority configuration information sent from the second node; being determined based on control resource set (CORESET) indexes for scheduling the plurality of downlink signals; being determined based on resource indexes of the plurality of downlink signals; or being signals with an earliest starting time domain resource among the plurality of downlink signals.

In an implementation, the priorities of the plurality of downlink signals satisfy at least one of: a priority of an aperiodic reference signal is higher than that of a semi-persistent reference signal, or a priority of the aperiodic reference signal is lower than that of the semi-persistent reference signal; a priority of the semi-persistent reference signal is higher than that of a periodic reference signal, or a priority of the semi-persistent reference signal is lower than that of the periodic reference signal; a priority of a synchronization signal block is higher than that of a channel state information reference signal, or a priority of the synchronization signal block is lower than that of the channel state information reference signal; a priority of a channel state information reference signal configured with repetition OFF is higher than that of a channel state information reference signal configured with repetition ON, or a priority of the channel state information reference signal configured with repetition OFF is lower than that of the channel state information reference signal configured with repetition ON; in a case where the priorities of the plurality of downlink signals are determined based on the CORESET indexes for scheduling the plurality of downlink signals, the smaller a CORESET index for scheduling a downlink signal, the higher a priority of the downlink signal, or in a case where the priorities of the plurality of downlink signals are determined based on the CORESET indexes for scheduling the plurality of downlink signals, the smaller a CORESET index for scheduling a downlink signal, the lower the priority of the downlink signal; in a case where the priorities of the plurality of downlink signals are determined based on the resource indexes of the plurality of downlink signals and a downlink signal is a reference signal, the smaller a resource index of the reference signal, the higher a priority of the reference signal, or in a case where the priorities of the plurality of downlink signals are determined based on the resource indexes of the plurality of downlink signals and a downlink signal is a reference signal, the smaller a resource index of the reference signal, the lower a priority of the reference signal.

In a possible implementation, the plurality of downlink signals include: channel transmission signals, where the channel transmission signal is a downlink signal transmitted based on a physical downlink shared channel and/or a physical downlink control channel; or the plurality of downlink signals include: channel transmission signalss and a reference signal; or the plurality of downlink signals include: a reference signal.

In an implementation, the reference signal is any one of: a periodic reference signal, an aperiodic reference signal, or a semi-persistent reference signal; the reference signal is a channel state information reference signal or a synchronization signal block.

FIG. 11 is yet another block diagram of a communication apparatus according to some embodiments of the present disclosure. The communication apparatus may execute the communication method provided in the above method embodiments. As shown in FIG. 11, the communication apparatus includes a sending unit 1101.

The sending unit 1101 is configured to send second indication information to a second node, where the second indication information includes a requirement for a measurement gap of a target cell in an activated state, and/or a requirement for a measurement gap t of a target cell in a deactivated state.

In an implementation, the measurement gap includes: a measurement gap and a network controlled small gap (NCSG).

In an implementation, the requirement for the measurement gap includes any one of: requiring the gap, requiring the NCSG, and requiring neither the gap nor the NCSG.

FIG. 12 is yet another block diagram of a communication apparatus according to some embodiments of the present disclosure. The communication apparatus may execute the communication method provided in the above method embodiments. As shown in FIG. 12, the communication apparatus includes a receiving unit 1201.

The receiving unit 1201 is configured to receive second indication information sent from a first node, where the second indication information includes a requirement for a measurement gap of a target cell in an activated state, and/or a requirement for a measurement gap of a target cell in a deactivated state.

In an implementation, the measurement gap includes: a measurement gap and a network controlled small gap (NCSG).

In an implementation, the requirement of the measurement gap includes any one of: requiring the gap, requiring the NCSG, and requiring neither the gap nor the NCSG.

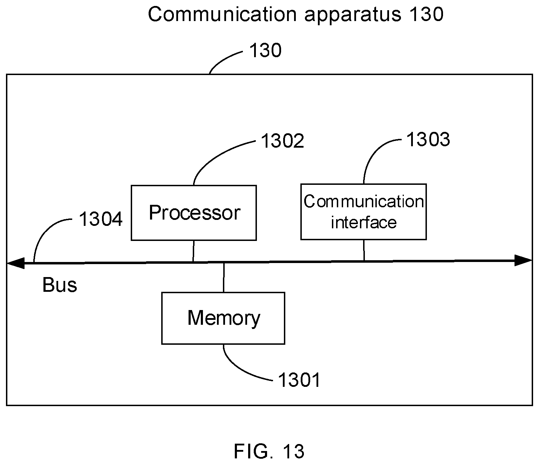

When the functions of the above integrated modules are implemented in the form of hardware, some embodiments of the present disclosure provide another possible structure of the communication apparatus involved in the above embodiments. As shown in FIG. 13, the communication apparatus 130 includes a processor 1302 and a bus 1304. In some embodiments, the communication apparatus may further include a memory 1301; in some embodiments, the communication apparatus may further include a communication interface 1303.

The processor 1302 may be a device that implements or executes various exemplary logical blocks, modules, and circuits described in combination with some embodiments of the present disclosure. The processor 1302 may be a central processing unit, a general-purpose processor, a digital signal processor (DSP), an application-specific integrated circuit, a field programmable gate array or other programmable logic devices, a transistor logic device, a hardware component, or any combination thereof. The processor 1302 may implement or execute various exemplary logical blocks, modules, and circuits described in combination with some embodiments of the present disclosure. The processor 1302 may also be a combination that implements a computing function, for example, a combination including one or more microprocessors, a combination of a DSP and a microprocessor, and the like.

The communication interface 1303 is configured to connect to other devices through a communication network. The communication network may be an Ethernet, a wireless access network, a wireless local area network (WLAN), and the like.

The memory 1301 may be a read-only memory (ROM) or other types of static storage devices that can store static information and instructions, a random access memory (RAM) or other types of dynamic storage devices that can store information and instructions, and may also be an electrically erasable programmable read-only memory (EEPROM), a magnetic disk storage medium or other magnetic storage devices, or any other medium that can be used to carry or store desired program codes in the form of instructions or data structures and can be accessed by a computer, but is not limited thereto.

As a possible implementation, the memory 1301 may exist independently of the processor 1302, and the memory 1301 may be connected to the processor 1302 through the bus 1304, for storing instructions or program codes. When the processor 1302 calls and executes the instructions or program codes stored in the memory 1301, the communication method provided in the embodiments of the present disclosure can be implemented.

In another possible implementation, the memory 1301 may also be integrated with the processor 1302.

The bus 1304 may be an extended industry standard architecture (EISA) bus, and the like. The bus 1304 may be divided into an address bus, a data bus, a control bus, and the like. For ease of representation, only one thick line is used in FIG. 13, but it does not mean that there is only one bus or one type of bus.

Some embodiments of the present disclosure provide a computer-readable storage medium (e.g., a non-transitory computer-readable storage medium), the computer-readable storage medium stores computer program instructions, where the computer program instructions, upon being run on a computer, enable the computer to execute the communication method according to any one of the above embodiments.

Exemplarily, the above computer-readable storage medium may include, but is not limited to: magnetic storage devices (e.g., a hard disk, a floppy disk, or a magnetic tape, and the like), optical discs (e.g., a compact disk (CD), a digital versatile disk (DVD), and the like), smart cards, and flash memory devices (e.g., an erasable programmable read-only memory (EPROM), a card, a stick, or a key drive, and the like). The various computer-readable storage media described in the present disclosure may represent one or more devices and/or other machine-readable storage media for storing information. The term "machine-readable storage medium" may include, but is not limited to, wireless channels and various other media capable of storing, containing, and/or carrying instructions and/or data.

The embodiments of the present disclosure provide a computer program product including instructions, where the computer program product, upon being run on a computer, enables the computer to execute the communication method according to any one of the above embodiments.

The above description is only specific implementations of the present disclosure, but the protection scope of the present disclosure is not limited thereto. Any variation or replacement within the technical scope disclosed in the present disclosure shall be covered within the protection scope of the present disclosure. Therefore, the protection scope of the present disclosure shall be subject to the protection scope of the claims.

## Claims

1. A communication method, wherein the method is applied to a first node, the first node is a node that expects to use a single-signal reception mode, and the method comprises:
receiving a first downlink signal from a second node; wherein the first downlink signal is a downlink signal among a plurality of downlink signals sent from the second node; and the plurality of downlink signals overlap in time domain.

2. The method according to claim 1, wherein the single-signal reception mode comprises a single radio frequency chain mode or a single-antenna panel mode.

3. The method according to claim 1, wherein before receiving the first downlink signal from the second node, the method further comprises:
sending first indication information to the second node, wherein the first indication information is used to indicate that the first node expects to use the single-signal reception mode.

4. The method according to claim 2, wherein in a case where the single-signal reception mode comprises the single-antenna panel mode, receiving the first downlink signal from the second node comprises:
receiving the first downlink signal using a first antenna panel among a plurality of antenna panels of the first node, wherein the first antenna panel is an antenna panel that operates upon the first node being in the single-antenna panel mode.

5. The method according to claim 2, wherein in a case where the single-signal reception mode comprises the single radio frequency chain mode, receiving the first downlink signal from the second node comprises:
receiving the first downlink signal using a first radio frequency chain among a plurality of radio frequency chains of the first node, wherein the first radio frequency chain is a radio frequency chain that operates upon the first node being in the single radio frequency chain mode.

6. The method according to claim 1, wherein the first downlink signal satisfies at least one of:
being a signal with a highest priority among the plurality of downlink signals;
being a signal detected earliest by the first node among the plurality of downlink signals;
being a signal scheduled earliest by the second node among the plurality of downlink signals; or
being a signal with an earliest starting time domain resource among the plurality of downlink signals.

7. The method according to claim 6, wherein priorities of the plurality of downlink signals are determined based on at least one of:
being determined based on a priority preconfigured by a system;
being determined based on priority configuration information sent from the second node;
being determined based on control resource set (CORESET) indexes for scheduling the plurality of downlink signals; or
being determined based on resource indexes of the plurality of downlink signals.

8. The method according to claim 7, wherein the priorities of the plurality of downlink signals satisfy at least one of:
a priority of an aperiodic reference signal is higher than that of a semi-persistent reference signal, or a priority of an aperiodic reference signal is lower than that of a semi-persistent reference signal;
a priority of a semi-persistent reference signal is higher than that of a periodic reference signal, or a priority of a semi-persistent reference signal is lower than that of a periodic reference signal;
a priority of a synchronization signal block is higher than that of a channel state information reference signal, or a priority of a synchronization signal block is lower than that of a channel state information reference signal;
a priority of a channel state information reference signal configured with repetition OFF is higher than that of a channel state information reference signal configured with repetition ON, or a priority of a channel state information reference signal configured with repetition OFF is lower than that of a channel state information reference signal configured with repetition ON;
in a case where the priorities of the plurality of downlink signals are determined based on the CORESET indexes for scheduling the plurality of downlink signals, the smaller a CORESET index for scheduling a downlink signal, the higher a priority of the downlink signal, or in a case where the priorities of the plurality of downlink signals are determined based on the CORESET indexes for scheduling the plurality of downlink signals, the smaller a CORESET index for scheduling a downlink signal, the lower a priority of the downlink signal; or
in a case where the priorities of the plurality of downlink signals are determined based on the resource indexes of the plurality of downlink signals and a downlink signal is a reference signal, the smaller a resource index of the reference signal, the higher a priority of the reference signal, or in a case where the priorities of the plurality of downlink signals are determined based on the resource indexes of the plurality of downlink signals and a downlink signal is a reference signal, the smaller a resource index of the reference signal, the lower a priority of the reference signal.

9. The method according to claim 1, wherein
the plurality of downlink signals comprise: channel transmission signals, wherein the channel transmission signal is a downlink signal transmitted based on a physical downlink shared channel and/or a physical downlink control channel; or,
the plurality of downlink signals comprise: a channel transmission signal and a reference signal; or,
the plurality of downlink signals comprise: the reference signals.

10. The method according to claim 9, wherein the reference signal is any one of: a periodic reference signal, an aperiodic reference signal, or a semi-persistent reference signal; and the reference signal is a channel state information reference signal or a synchronization signal block.

11. A communication method, wherein the method is applied to a second node, and the method comprises:
sending a first downlink signal to a first node; wherein the first downlink signal is a downlink signal among a plurality of downlink signals sent from the second node; the first node is a node that expects to use a single-signal reception mode; and the plurality of downlink signals overlap in time domain.

12. The method according to claim 11, wherein the single-signal reception mode comprises a single radio frequency chain mode or a single-antenna panel mode.

13. The method according to claim 11, wherein before sending the first downlink signal to the first node, the method further comprises:
receiving first indication information sent from the first node, wherein the first indication information is used to indicate that the first node expects to use the single-signal reception mode.

14. The method according to claim 11, wherein the first downlink signal satisfies at least one of:
being a signal with a highest priority among the plurality of downlink signals;
being a signal detected earliest by the first node among the plurality of downlink signals;
being a signal scheduled earliest by the second node among the plurality of downlink signals; or
being a signal with an earliest starting time domain resource among the plurality of downlink signals.

15. The method according to claim 14, wherein priorities of the plurality of downlink signals are determined based on at least one of:
being determined based on a priority preconfigured by a system;
being determined based on priority configuration information sent from the second node;
being determined based on CORESET indexes for scheduling the plurality of downlink signals; or
being determined based on resource indexes of the plurality of downlink signals.

16. The method according to claim 15, wherein the priorities of the plurality of downlink signals satisfy at least one of:
a priority of an aperiodic reference signal is higher than that of a semi-persistent reference signal, or a priority of an aperiodic reference signal is lower than that of a semi-persistent reference signal;
a priority of a semi-persistent reference signal is higher than that of a periodic reference signal, or
a priority of a semi-persistent reference signal is lower than that of a periodic reference signal;
a priority of a synchronization signal block is higher than that of a channel state information reference signal, or
a priority of a synchronization signal block is lower than that of a channel state information reference signal;
a priority of a channel state information reference signal configured with repetition OFF is higher than that of a channel state information reference signal configured with repetition ON, or a priority of a channel state information reference signal configured with repetition OFF is lower than that of a channel state information reference signal configured with repetition ON;
in a case where the priorities of the plurality of downlink signals are determined based on the CORESET indexes for scheduling the plurality of downlink signals, the smaller a CORESET index for scheduling a downlink signal, the higher a priority of the downlink signal, or in a case where the priorities of the plurality of downlink signals are determined based on the CORESET indexes for scheduling the plurality of downlink signals, the smaller the CORESET index for scheduling a downlink signal, the lower a priority of the downlink signal; or
in a case where the priorities of the plurality of downlink signals are determined based on the resource indexes of the plurality of downlink signals and a downlink signal is a reference signal, the smaller a resource index of the reference signal, the higher a priority of the reference signal, or in a case where the priorities of the plurality of downlink signals are determined based on the resource indexes of the plurality of downlink signals and a downlink signal is a reference signal, the smaller a resource index of the reference signal, the lower a priority of the reference signal.

17. The method according to claim 11, wherein
the plurality of downlink signals comprise: channel transmission signals, wherein the channel transmission signal is a downlink signal transmitted based on a physical downlink shared channel and/or a physical downlink control channel; or
the plurality of downlink signals comprise: a channel transmission signal and a reference signal; or
the plurality of downlink signals comprise: a reference signal.

18. The method according to claim 17, wherein the reference signal is any one of: a periodic reference signal, an aperiodic reference signal, or a semi-persistent reference signal; and the reference signal is a channel state information reference signal or a synchronization signal block.

19. A communication method, wherein the method is applied to a first node, and the method comprises:
sending second indication information to a second node, wherein the second indication information comprises a requirement for a measurement gap of a target cell in an activated state, and/or a requirement for a measurement gap of a target cell in a deactivated state.

20. The method according to claim 19, wherein the measurement gap comprises: a gap and a network controlled small gap (NCSG).

21. The method according to claim 19, wherein the requirement for the measurement gap comprises any one of: requiring the gap, requiring the NCSG, and requiring neither the gap nor the NCSG.

22. A communication method, wherein the method is applied to a second node, and the method comprises:
receiving second indication information sent from a first node, wherein the second indication information comprises a requirement for a measurement gap of a target cell in an activated state, and/or a requirement for a measurement gap of a target cell in a deactivated state.

23. The method according to claim 22, wherein the measurement gap comprises: a measurement gap and a network controlled small gap (NCSG).

24. The method according to claim 22, wherein the requirement for the measurement gap comprises any one of: requiring the gap, requiring the NCSG, and requiring neither the gap nor the NCSG.

25. A communication apparatus, comprising: a memory and a processor; wherein the memory and the processor are coupled; the memory is configured to store instructions executable by the processor; and the processor, upon executing the instructions, performs the method according to any one of claims 1-24.

26. A computer-readable storage medium, wherein the computer-readable storage medium has computer instructions stored thereon, and the computer instructions, upon being run on a computer, enable the computer to perform the method according to any one of claims 1-24.
